# EUROPEAN PATENT APPLICATION

(11) **EP 2 498 505 A1**
(43) Date of publication of application: **12.09.2012**
(21) Application number: 10826371.6
(22) Date of filing: 01.11.2010
(51) Int. Cl.: H04N 13/04, G02B 27/22, G02F 1/13, G02F 1/133, G09G 3/20, G09G 3/34, G09G 3/36, G09G 5/36

(54) **THREE-DIMENSIONAL DISPLAY APPARATUS AND THREE-DIMENSIONAL DISPLAY SYSTEM**

(30) Priority: 02.11.2009 JP 2009251688
(71) Applicant: Panasonic Corporation, Kadoma-shi Osaka 571-8501 (JP)
(72) Inventor: KOBAYASHI, Takahiro, Chuo-ku Osaka 540-6207 (JP); MIYAI, Hiroshi, Chuo-ku Osaka 540-6207 (JP); HAMADA, Seiji, Chuo-ku Osaka 540-6207 (JP); SAIGO, Katsuo, Chuo-ku, Osaka 540-6207 (JP); UMEDA, Yoshio, Chuo-ku, Osaka 540-6207 (JP)
(74) Representative: Grünecker, Kinkeldey, Stockmair & Schwanhäusser
(86) International application number: PCT/JP2010/006443
(87) International publication number: WO 2011/052236

(57) **Abstract**

A stereoscopic display apparatus and a stereoscopic display system capable of reducing flicker due to the influence of a fluorescent lamp while preventing an increase in crosstalk. The stereoscopic display apparatus includes a display controller that causes a display section to display left-eye video and right-eye video based on an input left-eye video signal and right -eye video signal and a shutter control section that controls an open/closed state of left and right shutters of stereoscopic image observation glasses in an opening/closing cycle in accordance with a display cycle of the left-eye video and the right-eye video, wherein the shutter control section controls a duty ratio of an open period of each of the left and right shutters to a greater value than 50% and the display controller causes the display section to display video on a side whose shutter is in the open state of the left-eye video and the right-eye video only while the shutter control section exercises control so that one of the left and right shutters is in the closed state.

## Description

### Technical Field

The present invention relates to a stereoscopic display system to observe stereoscopic video using glasses for observing stereoscopic images, and a stereoscopic display apparatus to use in this system.

### Background Art

As a conventional stereoscopic display apparatus to obtain stereoscopic video, a method of alternately supplying left-eye video and right-eye video having a parallax to a display in a predetermined cycle (for example, a field cycle) and observing images thereof through stereoscopic image observation glasses having g a liquid crystal shutter driven in synchronization with a predetermined cycle has been known (see, for example, patent literature 1).

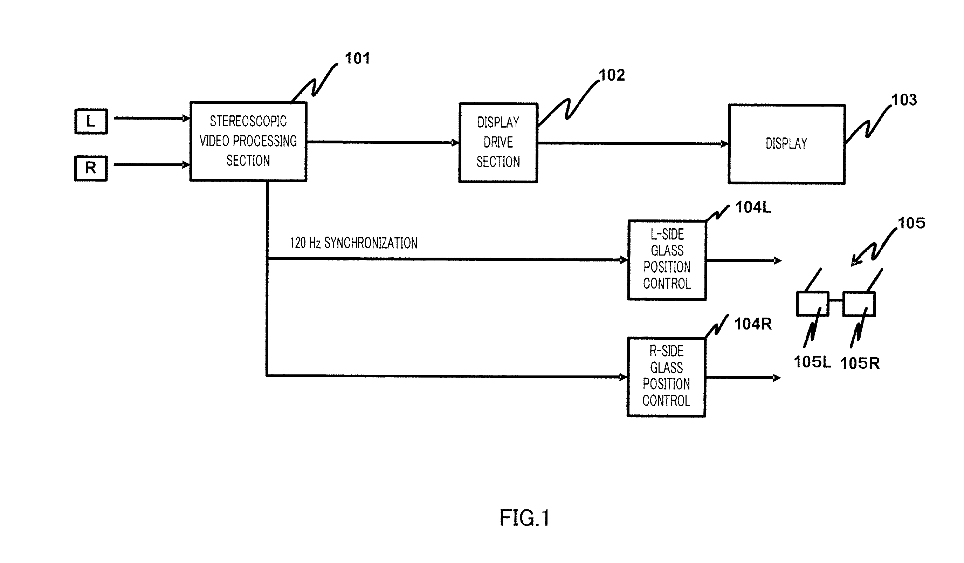

FIG.1 is a block diagram showing a conventional stereoscopic display system, and a case will be described where 60-Hz left and right video signals are input.

Left and right video signals of 60 Hz are input into stereoscopic video processing section 101 and converted into signals of 120 Hz cycle before being input into display drive section 102. In display drive section 102, left and right video signals of 120 Hz are converted into a form that can be displayed by display 103 and input into display 103. By this means, left and right images are alternately displayed on display 103 in a 120 Hz cycle.

On the other hand, left-side glass position control circuit 104L and right-side glass position control circuit 104R control left-side liquid crystal glass shutter 105L and right-side liquid crystal glass shutter 105R of stereoscopic observation glasses 105, respectively, based on the 120 Hz-cycle in stereoscopic video processing section 101. Glass position control circuits 104L and 104R control glass shutters 105L and 105R so that glass shutters 105L and 105R are opened and closed in synchronization with left and right alternate output images. Left and right images through glass shutters 105L and 105R are input into the left and right eyes of a person, respectively, to generate, as a result, a visual stereoscopic image in the head of the person.

Incidentally, light of a fluorescent lamp in a room, together with video from the display, enters the glasses for observing stereoscopic images shown with the above conventional example. The fluorescent lamp flashes on and off in synchronization with the power supply frequency and flicker occurs if the cycle of flashing and the cycle of driving stereoscopic image observation glasses hold a specific relationship.

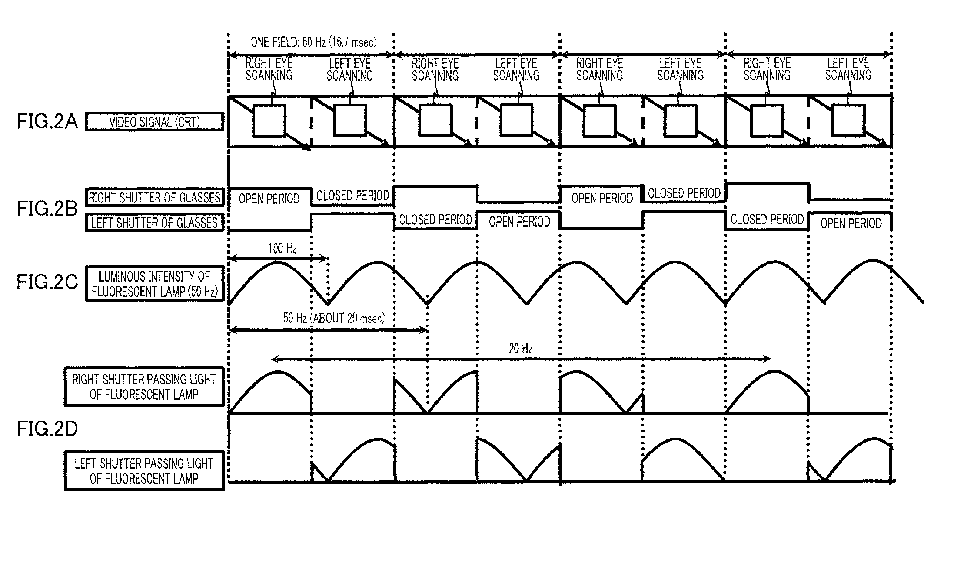

The flicker will be described using FIG.2. FIG.2 is a control timing chart in a conventional stereoscopic display apparatus. Here, it is assumed that display 103 is a CRT display. In FIG.2, FIG.2A shows scanning timing of left and right video signals in display 103, FIG.2B shows opening/closing timing of glass shutters 105L and 105R, FIG.2C shows changes in luminous intensity of a fluorescent lamp near an apparatus over time, and FIG.2D shows luminous intensity of the fluorescent lamp passing through glass shutters 105L and 105R. In a region where the commercial power supply frequency is 50 Hz, the waveform of the luminous intensity of a fluorescent lamp has a full-wave rectification waveform. Thus, the waveform is repeated in a cycle of 100 Hz. Results of integration with components of the luminous intensity waveform of the fluorescent lamp of 100 Hz and the shutter opening/closing timing (in FIG.2, the duty ratio of opening/closing is 1:1 (50%)) are the waveforms of light passing glass shutters 105L and 105R in FIG.2D. As shown by the waveforms of FIG.2D, these waveforms have a cycle of 20 Hz. The frequency components of these waveforms are perceived by eyes as flicker, causing disturbance.

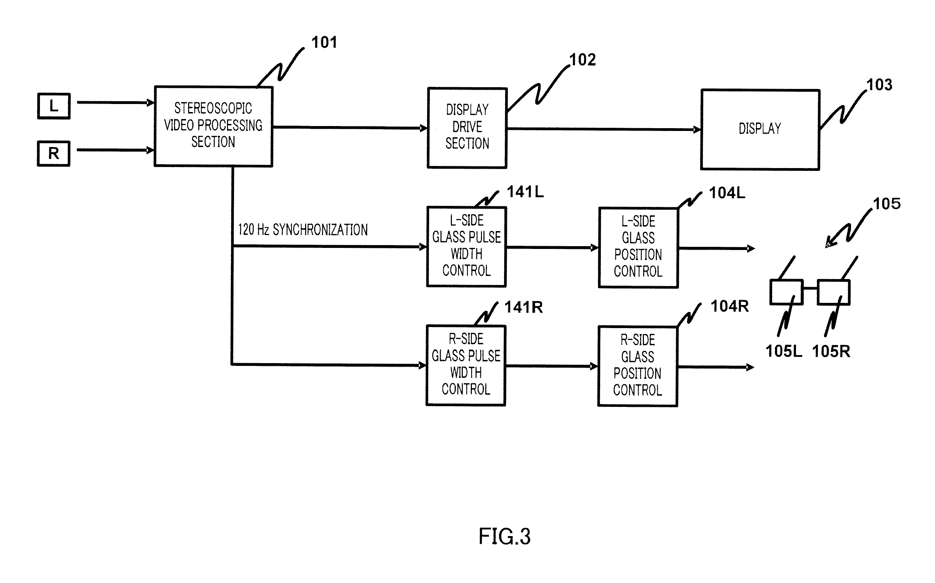

By contrast with this, to improve the above flicker of 20 Hz, a method of avoiding flicker by providing a glass pulse width control circuit to change the opening/closing time of glasses is disclosed (see, for example, patent literature 2). As shown in FIG.3, compared with the conventional example shown in FIG.1, this method adds right-side glass pulse width control circuit 141R and left-side glass pulse width control circuit 141L. The duration of an open period in which glasses are in an open state (that is, in a state in which light transmits) is basically coordinated with the fluorescent lamp cycle period (10 msec) of 100 Hz, by left-side glass pulse width control circuit 141L and right-side glass pulse width control circuit 141R. On the other hand, the duration of a closed period in which glasses are in a closed state (that is, in a state in which light is blocked) is coordinated with the remaining time (6.7 msec) of the cycle period (16.7 msec) of the glasses of 60 Hz. Accordingly, the open period of glasses matches the cycle length of the luminous intensity waveform of a fluorescent lamp of 100 Hz, so that flicker does not occur.

### Citation List

### Patent Literature

PTL 1
   Japanese Patent Application Laid-Open No. 62-133891
PTL 2
   Japanese Patent Application Laid-Open No. 9-138384

### Summary of Invention

### Technical Problem

However, the method according to patent literature 2 has the following problems. If the above open/closed period durations are set with respect to glass shutters, the left and right shutter open periods overlap. Thus, a left-eye image enters the right-side glass shutter and a right-eye image enters the left-side glass shutter, causing a problem that disturbance images called crosstalk are input into left and right eyes. According to patent literature 2, both disturbances of crosstalk and flicker are reduced in a well-balanced manner by coordinating the period in which the open periods overlap with the blanking period in which there is no effective video of the other video (the left field video for the right video and the right field video for the left video), to make the open period close to 10 msec.

However, the above method of reducing flicker may not be able to obtain an adequate effect of reducing flicker depending on the length of blanking period. On the other hand, there is a problem that the disturbance of crosstalk increases if the open period of the shutter is set longer.

It is therefore an object of the present invention to provide a stereoscopic display apparatus and a stereoscopic display system capable of reducing flicker due to the influence of a fluorescent lamp while preventing an increase in crosstalk.

### Solution to Problem

To solve the above problem, a stereoscopic display apparatus according to a first aspect of the present invention includes a display controller that causes a display section to display left-eye video and right-eye video based on an input left-eye video signal and right -eye video signal and a shutter control section that controls an open/closed state of left and right shutters of stereoscopic image observation glasses in an opening/closing cycle in accordance with a display cycle of the left-eye video and the right-eye video, wherein the shutter control section controls a duty ratio of an open period of each of the left and right shutters to a greater value than 50% and the display controller causes the display section to display video on a side whose shutter is in the open state of the left-eye video and the right-eye video only while the shutter control section exercises control so that one of the left and right shutters is in the closed state.

A stereoscopic display apparatus according to a second aspect of the present invention includes a liquid crystal panel that modulates light entering from a rear side in accordance with an input left-eye video signal and right-eye video signal to display left-eye video and right-eye video, a backlight that radiates the liquid crystal panel with the light from the back side, a backlight control section that controls a light-emitting state of the backlight, and a shutter control section that controls an open/closed state of left and right shutters of stereoscopic image observation glasses in an opening/closing cycle in accordance with a display cycle of the left-eye video and the right-eye video, wherein the shutter control section controls a duty ratio of an open period of each of the left and right shutters to a greater value than 50% and the backlight control section exercises control so that the backlight is turned on only while the shutter control section exercises control so that one of the left and right shutters is in the closed state.

A stereoscopic display apparatus according to a third aspect of the present invention includes a liquid crystal panel that modulates light entering from a rear side in accordance with an input left-eye video signal and right-eye video signal to display left-eye video and right-eye video, a backlight that radiates the liquid crystal panel with the light from the back side, a backlight control section that controls a light-emitting state of the backlight, a shutter control section that controls an open/closed state of left and right shutters of stereoscopic image observation glasses in an opening/closing cycle in accordance with a display cycle of the left-eye video and the right-eye video, and a flicker detection section that detects whether or not there is flicker due to interference of a brightness fluctuation cycle of ambient light of a local apparatus and the opening/closing cycle, wherein if the flicker is detected by the flicker detection section, the shutter control section controls a duty ratio of an open period of each of the left and right shutters to a greater value than 50% and if the flicker is detected by the flicker detection section, the backlight control section exercises control so that the backlight is turned on only while the shutter control section exercises control so that one of the left and right shutters is in the closed state.

A stereoscopic display apparatus according to a fourth aspect of the present invention includes a liquid crystal panel that modulates light entering from a rear side in accordance with an input left-eye video signal and right-eye video signal to display left-eye video and right-eye video, a backlight that radiates the liquid crystal panel with the light from the back side, a backlight control section that controls a light-emitting state of the backlight, and a shutter control section that controls an open/closed state of left and right shutters of stereoscopic image observation glasses in an opening/closing cycle in accordance with a display cycle of the left-eye video and the right-eye video, wherein an open period duration of each of the left and right shutters substantially matches a brightness fluctuation cycle of ambient light of a local apparatus and the backlight control section exercises control so that the backlight is turned on only while the shutter control section exercises control so that one of the left and right shutters is in the closed state.

A stereoscopic display apparatus according to a fifth aspect of the present invention includes a liquid crystal panel that modulates light entering from a rear side in accordance with an input left-eye video signal and right-eye video signal to display left-eye video and right-eye video, a backlight that radiates the liquid crystal panel with the light from the back side, a backlight control section that controls a light-emitting state of the backlight, and a shutter control section that controls an open/closed state of left and right shutters of stereoscopic image observation glasses in an opening/closing cycle in accordance with a display cycle of the left-eye video and the right-eye video, wherein an open period duration of each of the left and right shutters substantially matches 1/2 of a cycle of a commercial power supply voltage supplied to a local apparatus and the backlight control section exercises control so that the backlight is turned on only while the shutter control section exercises control so that one of the left and right shutters is in the closed state.

A stereoscopic display system according to another aspect of the present invention includes the stereoscopic display apparatus and stereoscopic image observation glasses in which an open/closed state of left and right shutters is controlled by the stereoscopic display apparatus according to the left-eye video and the right-eye video.

### Advantageous Effects of Invention

According to a stereoscopic display apparatus and a stereoscopic display system according to the present invention, it is possible to provide a stereoscopic display apparatus and stereoscopic display system that are capable of reducing flicker due to the influence of a fluorescent lamp while preventing an increase in crosstalk.

### Brief Description of the Drawings

FIG.1 is a block diagram showing a conventional stereoscopic display system;
FIG.2 is a control timing chart of a conventional stereoscopic display apparatus, FIG.2A shows scanning timing of left and right video signals, FIG.2B shows opening/closing timing of a glass shutter, FIG.2C shows luminous intensity of a fluorescent lamp near the apparatus, and FIG.2D shows the luminous intensity of shutter passing light;
FIG.3 is a block diagram showing the stereoscopic display system improving conventional flicker;

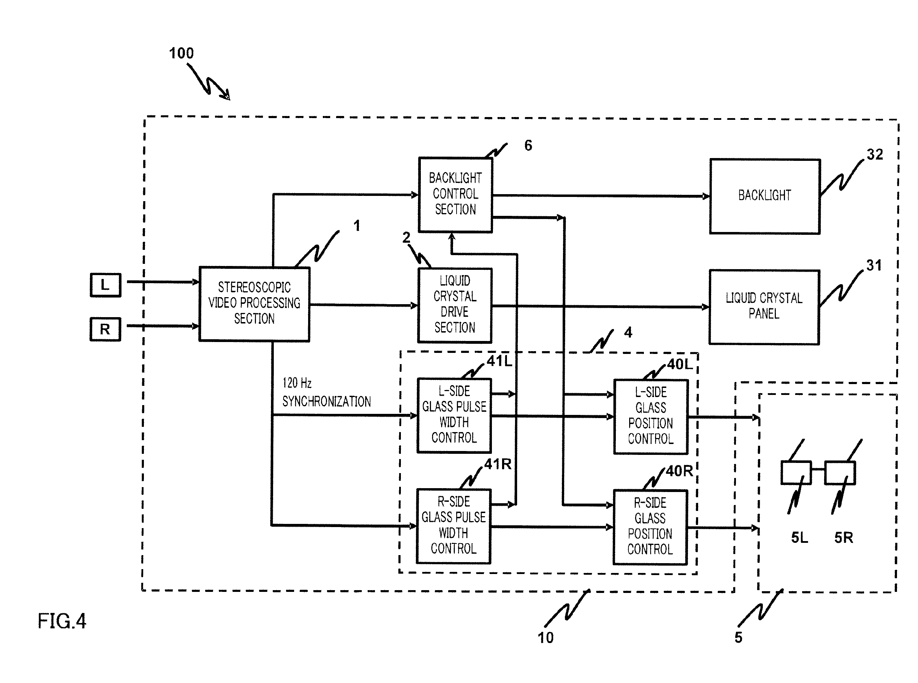

FIG.4 is a block diagram showing a configuration of the stereoscopic display system according to Embodiment 1;

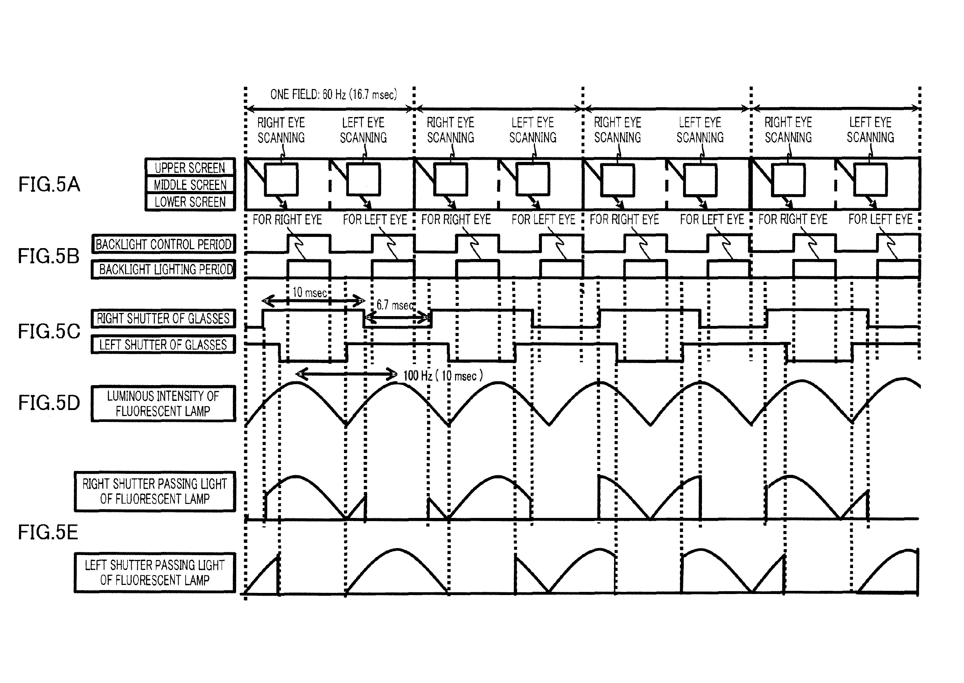

FIG.5 is a control timing chart of the stereoscopic display system, FIG.5A shows scanning timing of left and right video signals, FIG.5B shows timing of light emission on/off control of backlight and a light emission period, FIG.5C shows opening/closing timing of a shutter, FIG.5D shows luminous intensity of the fluorescent lamp near the apparatus, and FIG.5E shows the luminous intensity of shutter passing light;

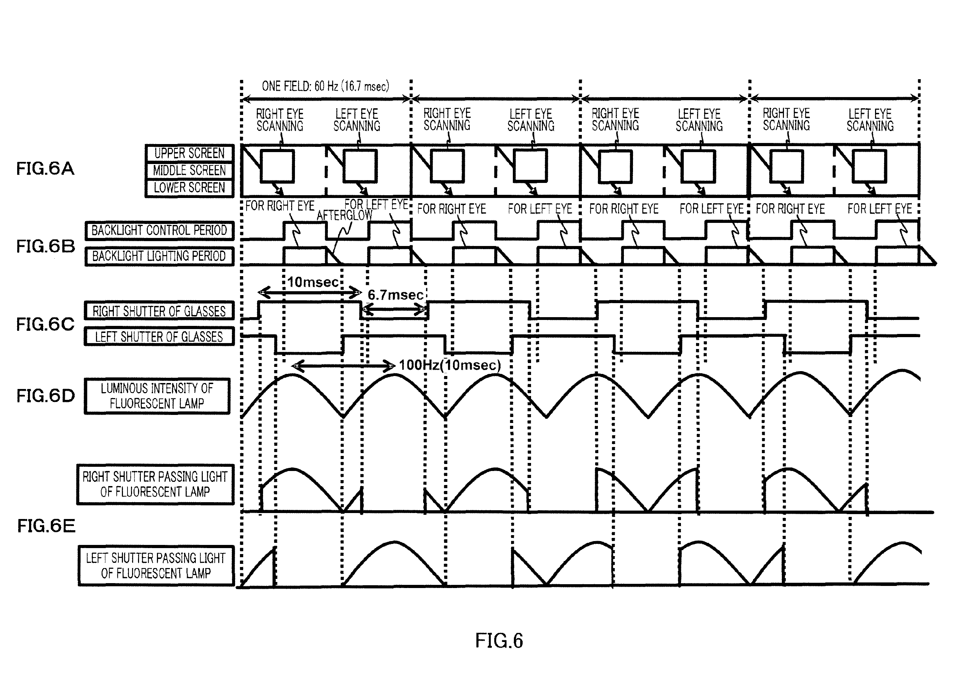

FIG.6 is a control timing chart of the stereoscopic display system when a fluorescent tube is used as the backlight, FIG.6A shows scanning timing of left and right video signals, FIG.6B shows timing of the light emission on/off control of the backlight and the light emission period, FIG.6C shows opening/closing timing of the shutter, FIG.6D shows luminous intensity of the fluorescent lamp near the apparatus, and FIG.6E shows the luminous intensity of shutter passing light;

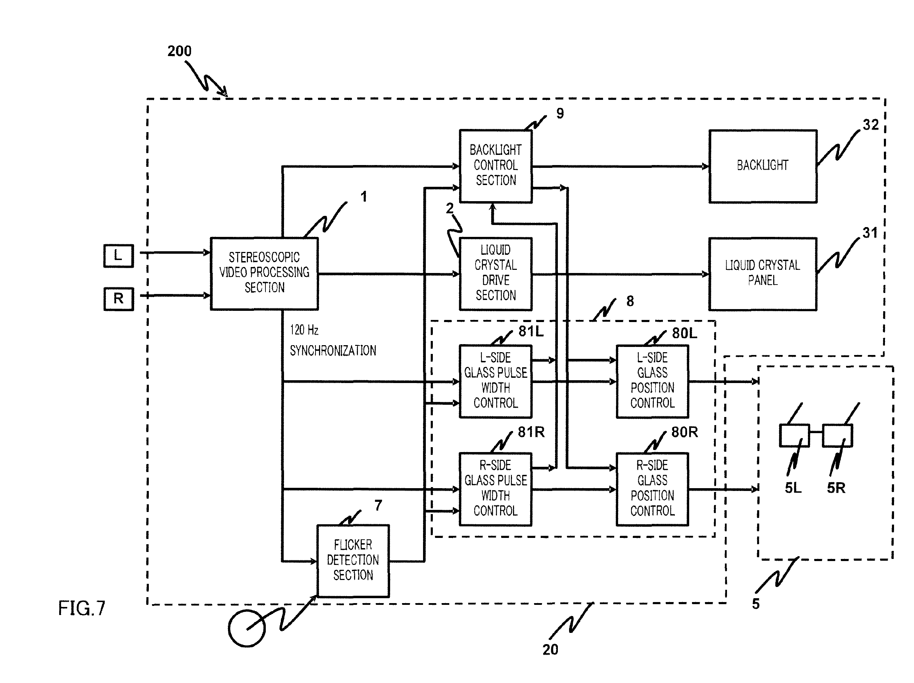

FIG.7 is a block diagram showing the configuration of the stereoscopic display system according to Embodiment 2;

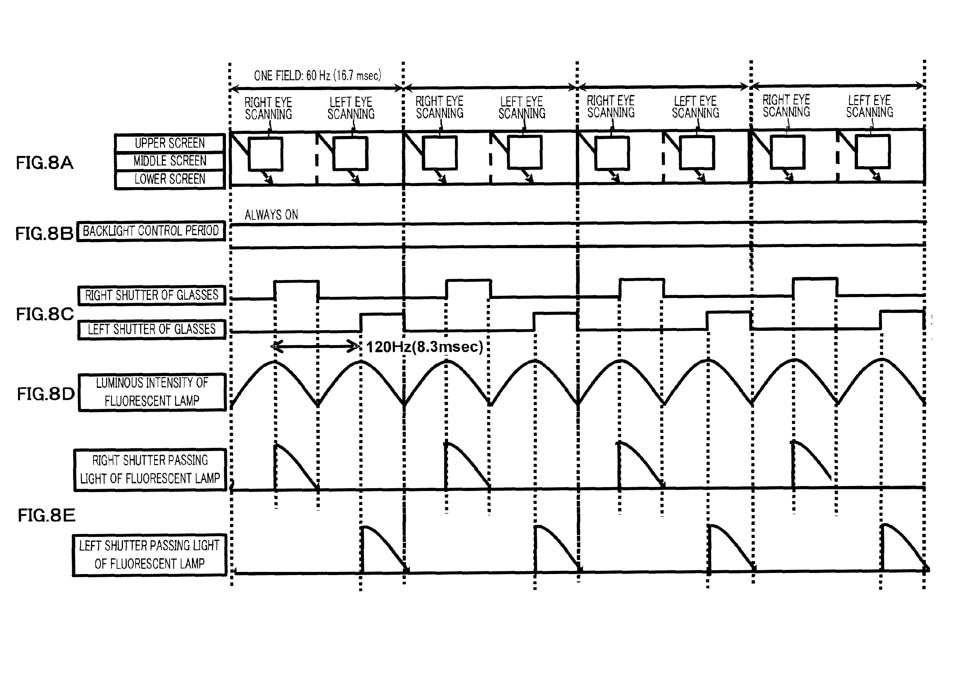

FIG.8 is a control timing chart of the stereoscopic display system when the power supply frequency is 60 Hz and flicker does not occur, FIG.8A shows scanning timing of left and right video signals, FIG.8B shows timing of the light emission on/off control of the backlight and the light emission period, FIG.8C shows opening/closing timing of the shutter, FIG.8D shows luminous intensity of the fluorescent lamp near the apparatus, and FIG.8E shows the luminous intensity of shutter passing light; and

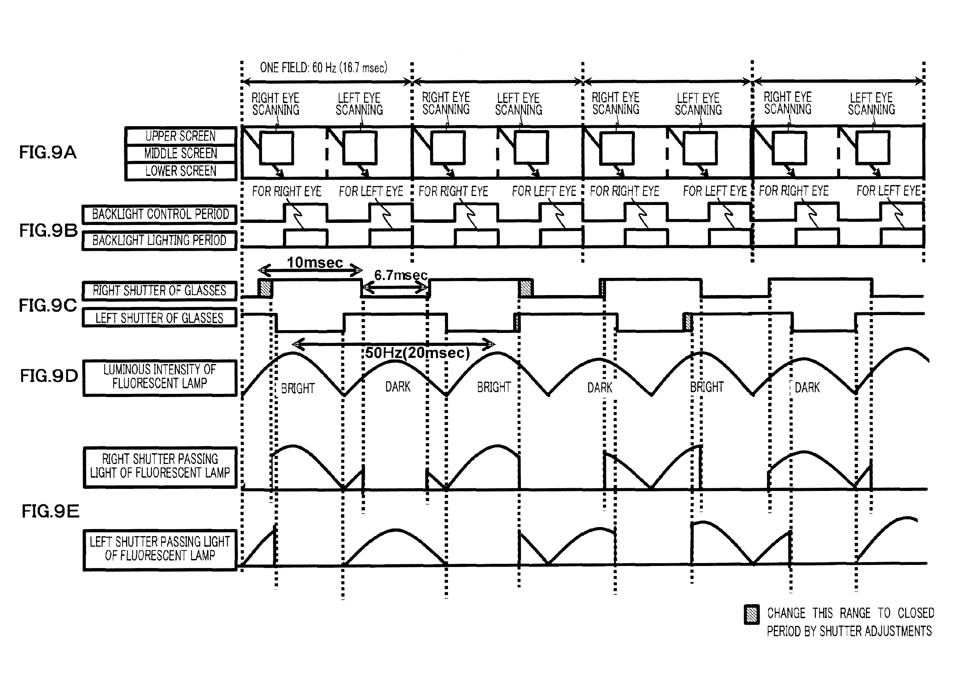

FIG.9 is a control timing chart when the power supply frequency is 50 Hz and brightness of the first crest and that of the second crest in a fluorescent lamp are different, FIG.9A shows scanning timing of left and right video signals, FIG.9B shows timing of the light emission on/off control of the backlight and the light emission period, FIG.9C shows opening/closing timing of the shutter, FIG.9D shows luminous intensity of the fluorescent lamp near the apparatus, and FIG.9E shows the luminous intensity of shutter passing light.

### Description of Embodiments

Embodiments of the present invention will be described below with reference to the accompanying drawings. In the following embodiments, the same reference numerals will be assigned to the same structural elements and overlapping descriptions will be omitted.

### (Embodiment 1)

FIG.4 is a block diagram showing the configuration of the stereoscopic display system according to Embodiment 1. Stereoscopic display system 100 includes stereoscopic display apparatus 10 and stereoscopic image observation glasses 5 in which an open/closed state of left and right shutters 5L and 5R is controlled by stereoscopic display apparatus 10 in accordance with the left-eye video and right-eye video.

Stereoscopic display apparatus 10 includes stereoscopic video processing section 1, liquid crystal drive section 2, liquid crystal panel 31, backlight 32, shutter control section 4, and backlight control section 6.

Stereoscopic video processing section 1 has left and right video signals having a basic vertical synchronous frequency input thereinto. Then, stereoscopic video processing section 1 divides left and right video signals into a left-eye video signal and a right-eye video signal using a frequency N times (N is a positive integer equal to 1 or greater) the basic vertical synchronous frequency and outputs the left-eye video signal and the right-eye video signal. In the present embodiment, the input left and right video signals (the left-eye video signal and the right-eye video signal) of 60 Hz are input, converted into signals of a 120 Hz cycle, and output to liquid crystal drive section 2, shutter control section 4, and backlight control section 6.

Liquid crystal drive section 2 converts left and right video signals of 120 Hz into a form that can be displayed on liquid crystal panel 31. Liquid crystal drive section 2 inputs the left and right video signals into liquid crystal panel 31.

Liquid crystal panel 31 modulates light entering from the rear side in accordance with the input left-eye video signal and right-eye video signal to display the left-eye video and the right-eye video in turn. Liquid crystal panel 31 of various drive methods such as the IPS (In Plane Switching) method, VA (Vertical Alignment) method, and TN (Twisted Nematic) method are applicable.

Backlight 32 radiates liquid crystal panel 31 with light from the rear side. Backlight 32 to emit light by surface emission using a plurality of light-emitting diodes, arranged two-dimensionally, can be used. Alternatively, backlight 32 surface-emitting light by arranging a plurality of fluorescent tubes may also be used. Backlight 32 may also be of an edge type in which a light-emitting diode or a fluorescent tube is arranged at an edge thereof. Backlight 32 emits light based on a light emission control signal from backlight control section 6, based on the 120-Hz cycle output from stereoscopic video processing section 1.

Shutter control section 4 controls the open/closed state of the left and right shutters of stereoscopic image observation glasses 5 in the opening/closing cycle in accordance with the display cycle of the left-eye video and right-eye video. In the present embodiment, shutter control section 4 controls the open/closed state in accordance with the display cycle of 120 Hz of the left-eye video and right-eye video and thus exercises control in the opening/closing cycle of 60 Hz. In the present embodiment, shutter control section 4 has left-side glass position control circuit 40L, right-side glass position control circuit 40R, left-side glass pulse width control circuit 41L, and right-side glass pulse width control circuit 41R.

Left and right glass pulse width control circuits 41L and 41R decide the pulse duration of the open period of each of left and right shutters 5L and 5R based on the 120-Hz cycle in stereoscopic video processing section 1. Left and right glass position control circuits 40L and 40R have an output signal of glass pulse width control circuits 41L and 41R input thereinto, and decide the phase in the shutter open period. Then, the open/closed state of the left and right shutters 5L and 5R is controlled based on the output signal of glass position control circuits 40L and 40R.

First, the pulse width (open period duration) of the shutter that makes flicker less likely is set by shutter control section 4 so that even a fluorescent lamp in a region where the commercial power supply frequency is 50 Hz does not flicker. If the input left and right video signals are 60 Hz and the full-wave rectified cycle of a fluorescent lamp is perfectly 100 Hz, the pulse width is set to 10 msec.

Next, backlight control section 6 decides the lighting period ("on" period) of the backlight based on the signal pulse width output by glass pulse width control circuits 41L and 41R and the type of backlight 32. Glass position control circuit 40L exercises control based on output of backlight control section 6 so that left-side shutter 5L is always in a closed period while backlight 32 is turned on in accordance with a right-eye video signal. Glass position control circuit 40R exercises control based on output of backlight control section 6 so that right-side shutter 5R is always in a closed period while backlight 32 is turned on corresponds to a left-eye video signal.

FIG.5 shows a control timing chart of stereoscopic display system 100. In FIG.5, FIG.5A shows scanning timing of left and right video signals in liquid crystal panel 31, FIG.5B shows timing of light emission on/off control of backlight 32 by backlight control section 6 and a light emission period of backlight 32, FIG.5C shows opening/closing timing of shutters 5L and 5R, FIG.5D shows changes in luminous intensity of a fluorescent lamp near the apparatus over time, and FIG.5E shows the luminous intensity of the fluorescent lamp passing through shutters 5L and 5R. Here, since the power supply frequency is 50 Hz, the luminous intensity of the fluorescent lamp has, as shown in FIG.5D, 100 Hz (10 msec) as the cycle of the waveform peak of luminous intensity. The duration of the open period of left and right shutters 5L and 5R of glasses is set to, as described above, 10 msec. As a result, even if the luminous intensity phase of a fluorescent lamp shifts, light from the fluorescent lamp amounting to approximately one cycle passes the shutters so that the light of the fluorescent lamp that passes through the shutters becomes constant, causing no flicker.

Further, as described above, control is exercised so that left-eye shutter 5L is in a closed state while backlight 32 is turned on in accordance with a right-eye video signal, and right-eye shutter 5R is in a closed state while backlight 32 is turned on in accordance with a left-eye video signal. Thus, occurrence of crosstalk of left and right images can be alleviated.

In the present embodiment, shutter control section 4 is configured to control the open/closed state of left and right shutters 5L and 5R so that the open period of each of left and right shutters 5L and 5R becomes 10 msec. That is, the open period duration of each of left and right shutters 5L and 5R substantially matches the cycle in which the brightness of ambient light fluctuates, in stereoscopic display apparatus 10. Here, "substantially matches" means, for example, 90% of match or greater. By this means, it is possible to minimize flicker. In other words, the open period duration of each of left and right shutters 5L and 5R substantially matches 1/2 of the cycle of the commercial power supply voltage supplied to stereoscopic display apparatus 10. As a result, the amounts of ambient light entering in the open period of each of left and right shutters 5L and 5R substantially match, so that it is possible to minimize flicker. However, control of shutter control section 4 is not limited to this. Shutter control section 4 can provide a greater effect of reducing flicker than a conventional stereoscopic display apparatus by controlling the duty ratio of the open period for both left and right shutters 5L and 5R to a greater value than 50%. If the duty ratio of the open period for both left and right shutters 5L and 5R is greater than 50%, the open periods of shutters overlap. However, backlight control section exercises control such that backlight 32 is turned on only while shutter control section 4 exercises control so that one of left and right shutters 5L and 5R is in the closed state, which makes it possible to alleviate an occurrence of crosstalk.

Next, modifications of Embodiment 1 will be described.

FIG.6 shows a control timing chart of stereoscopic display system 100 when a fluorescent tube is used as backlight 32. In the present modification, backlight control section 6 controls a light-emitting state of backlight 32 to prevent afterglow after backlight 32 is turned off from leaking while both shutters 5R and 5L are in the open state.

As shown in FIG.6, due to an influence of afterglow of the fluorescent substance of backlight 32, the control time of backlight 32 and the lighting time of backlight 32 are not the same and the lighting time of backlight 32 becomes longer. Of the afterglow, G (Green) is generally the longest. Therefore, not only crosstalk, it is possible to reduce color irregularities and so on, in addition to crosstalk, by exercising control so that the on period of backlight 32 including afterglow is included in the closed period of each of shutters 5R and 5L.

### (Embodiment 2)

Next, Embodiment 2 of the present invention will be described with reference to the drawings. Embodiment 2 is mainly different from Embodiment 1 in that a flicker detection section to detect flicker is included.

FIG.7 is a block diagram showing the configuration of stereoscopic display system 200 according to Embodiment 2. Stereoscopic display system 200 includes stereoscopic display apparatus 20 and stereoscopic image observation glasses 5 in which the open/closed state of left and right shutters 5L and 5R is controlled by stereoscopic display apparatus 20 in accordance with the left-eye video and right-eye video.

Stereoscopic display apparatus 20 includes stereoscopic video processing section 1, liquid crystal drive section 2, liquid crystal panel 31, backlight 32, flicker detection section 7, shutter control section 8, and backlight control section 9.

Flicker detection section 7 detects whether or not there is flicker due to interference of the brightness fluctuation cycle of ambient light of stereoscopic display apparatus 20 and the shutter opening/closing cycle. For example, if the amplitude of flicker is equal to a predetermined value or greater, it is determined that there is flicker, and, if the amplitude of flicker is the predetermined value or less, it is determined that there is not flicker. In the present embodiment, flicker detection section 7 has a synchronization signal of the frequency 120 Hz in left and right video signals and ambient light from a fluorescent lamp input thereinto to detect flicker of the fluorescent lamp in a region of the 50 Hz power supply frequency.

If flicker is detected by flicker detection section 7, shutter control section 8 controls the duty ratio of the open period for both left and right shutters 5L and 5R to a greater value than 50%. If flicker is not detected, shutter control section 8 controls the duty ratio of the open period of each of left and right shutters 5L and 5R to 50% or a lower value.

If flicker is detected by flicker detection section 7, backlight control section 9 exercises control such that the backlight is turned on only while shutter control section 8 exercises control so that one of left and right shutters 5L and 5R is in the closed state. In the present embodiment, if flicker is not detected by flicker detection section 7, backlight control section 9 exercises control so that backlight 32 is always turned on.

As a concrete example, FIG.8 shows a control timing chart of stereoscopic display system 200 when the power supply frequency is 60 Hz and flicker is not detected by flicker detection section 7. As shown in FIG. 8, if flicker is not detected by flicker detection section 7, the pulse width of shutters 5R and 5L is adjusted to 1/120 sec or less (8.35 msec or less) and the on period of backlight 32 is adjusted so that the brightness can be maximized or crosstalk can be optimized. As shown in FIG.8B, open periods of shutters 5L and 5R do not overlap so that crosstalk can be suppressed.

On the other hand, if the power supply frequency is 50 Hz and flicker of a fluorescent lamp is detected by flicker detection section 7, control is exercised according to the control timing chart shown in FIG.5.

Thus, the effect shown below can be obtained by switching control depending on whether or not flicker is detected. If flicker is detected, the shutter open period is increased to reduce flicker and also lighting timing of the backlight is controlled to prevent an occurrence of crosstalk. On the other hand, if flicker is not detected, an occurrence of crosstalk can be prevented by reducing the shutter open period and also brightness can be increased by causing the backlight to light at all times or responsiveness can be enhanced by raising the temperature of liquid crystal panel 31.

In the present embodiment, if flicker is not detected by flicker detection section 7, backlight control section 8 exercises control so that backlight 32 is always turned on, but the present embodiment is not limited to this. If flicker is not detected by flicker detection section 7, backlight control section 9 exercises control such that the backlight is turned on only while shutter control section 8 exercises control so that one of left and right shutters 5L and 5R is in the open state. By this means, power consumption can be reduced.

The method of detecting whether or not there is flicker is not limited to the above method. For example, whether or not there is flicker may be determined such that it is determined that there is flicker when the power supply frequency of a stereoscopic display apparatus is 50 Hz or it is determined that there is not flicker when the power supply frequency is 60 Hz.

### (Embodiment 3)

Next, Embodiment 3 of the present invention will be described with reference to the drawings. Embodiment 3 is different from Embodiments 1 and 2 in that flicker is further reduced when the full-wave rectified amplitude of light emission brightness of a fluorescent lamp is asymmetric.

In the present embodiment, the configuration of the block diagram is almost the same as in Embodiment 2. However, flicker may not be sufficiently eliminated by Embodiment 1 or 2 if, for example, when the power supply frequency is 50 Hz, the full-wave rectified light emission of a fluorescent lamp does not have the 100 Hz cycle, but as a result of different frequencies in the first and second crests due to a rectifier circuit, the light emission has 50 Hz, or the basic frequency of input left and right video signals is slightly shifted from 60 Hz. In the present embodiment, the flicker detection section detects the cycle of flicker caused by interference of the brightness fluctuation cycle of ambient light of the local apparatus and the shutter opening/closing cycle. Then, the shutter control section controls the duration of the open period or the duration of the closed period of the left and right shutters based on the cycle of flicker.

FIG.9 shows a control timing chart when brightness of the first crest and that of the second crest in a fluorescent lamp of the power supply frequency of 50 Hz are different FIG.9D shows luminous intensity of a fluorescent lamp. Here, shutter control section 9 controls the open/closed state of left and right shutters 5L and 5R so that flicker becomes smaller. More specifically, flicker can further be improved by exercising control in accordance with the flicker cycle whose open period of shutters 5L and 5R is detected.

In all the above embodiments, the liquid crystal panel is an example of the display section. The backlight and backlight control section are examples of the display controller. If, for example, a stereoscopic display apparatus includes a display controller capable of controlling display timing of video to be displayed on a display section, an organic EL panel or a plasma display panel may be applied as the display section.

The disclosure of Japanese Patent Application No. 2009-251688, filed on November 2, 2009, including the specification, drawings, and abstract, is incorporated herein by reference in its entirety.

### Industrial Applicability

The present invention is suitable as a stereoscopic display apparatus and a stereoscopic display system capable of reducing crosstalk and reducing flicker.

### Reference Signs List

1, 101 Stereoscopic video processing section
2 Liquid crystal drive section
31 Liquid crystal panel
32 Backlight
4, 8 Shutter control section
40L, 80L, 104L Left-side glass position control circuit
40R, 80R, 104R Right-side glass position control circuit
41L, 81L, 141L Left-side glass pulse width control circuit
41R, 81 R, 141 R Right-side glass pulse width control circuit
5, 105 Stereoscopic image observation glasses
5L, 105L Left shutter
5R, 105R Right shutter
6, 9 Backlight control section
7 Flicker detection section
10, 20 Stereoscopic display apparatus
100, 200 Stereoscopic display system
102 Display drive section
103 Display

## Claims

1. A stereoscopic display apparatus, comprising:
a display controller that causes a display section to display left-eye video and right-eye video based on an input left-eye video signal and right -eye video signal; and
a shutter control section that controls an open/closed state of left and right shutters of stereoscopic image observation glasses in an opening/closing cycle in accordance with a display cycle of the left-eye video and the right-eye video, wherein:
the shutter control section controls a duty ratio of an open period of both the left and right shutters to a greater value than 50%; and
the display controller causes the display section to display video on a side whose shutter is in the open state of the left-eye video and the right-eye video only while the shutter control section exercises control so that one of the left and right shutters is in the closed state.

2. A stereoscopic display apparatus, comprising:
a liquid crystal panel that modulates light entering from a rear side in accordance with an input left-eye video signal and right-eye video signal to display left-eye video and right-eye video;
a backlight that radiates the liquid crystal panel with the light from the back side;
a backlight control section that controls a light-emitting state of the backlight; and
a shutter control section that controls an open/closed state of left and right shutters of stereoscopic image observation glasses in an opening/closing cycle in accordance with a display cycle of the left-eye video and the right-eye video, wherein:
the shutter control section controls a duty ratio of an open period of both the left and right shutters to a greater value than 50%; and
the backlight control section exercises control so that the backlight is turned on only while the shutter control section exercises control so that one of the left and right shutters is in the closed state.

3. A stereoscopic display apparatus, comprising:
a liquid crystal panel that modulates light entering from a rear side in accordance with an input left-eye video signal and right-eye video signal to display left-eye video and right-eye video;
a backlight that radiates the liquid crystal panel with the light from the back side;
a backlight control section that controls a light-emitting state of the backlight;
a shutter control section that controls an open/closed state of left and right shutters of stereoscopic image observation glasses in an opening/closing cycle in accordance with a display cycle of the left-eye video and the right-eye video; and
a flicker detection section that detects whether or not there is flicker due to interference of a brightness fluctuation cycle of ambient light of a local apparatus and the opening/closing cycle, wherein:
if the flicker is detected by the flicker detection section, the shutter control section controls a duty ratio of an open period of each of the left and right shutters to a greater value than 50%; and
if the flicker is detected by the flicker detection section, the backlight control section exercises control so that the backlight is turned on only while the shutter control section exercises control so that one of the left and right shutters is in the closed state.

4. The stereoscopic display apparatus according to claim 3, wherein, if flicker is not detected by the flicker detection section, the shutter control section controls the duty ratio of the open period of each of the left and right shutters to 50% or a smaller value.

5. The stereoscopic display apparatus according to claim 3, wherein, if flicker is not detected by the flicker detection section, the backlight control section exercises control so that the backlight is always turned on.

6. The stereoscopic display apparatus according to claim 3, wherein, if flicker is not detected by the flicker detection section, the backlight control section exercises control so that the backlight is turned on only while the shutter control section exercises control so that one of the left and right shutters is in the open state.

7. The stereoscopic display apparatus according to claim 2, wherein the backlight control section controls the light-emitting state of the backlight to prevent afterglow after the backlight is turned off from leaking in a period when the left and right shutters are both in the open state.

8. The stereoscopic display video apparatus according to claim 3, wherein the backlight control section controls the light-emitting state of the backlight to prevent afterglow after the backlight is turned off from leaking in a period when the left and right shutters are both in the open state.

9. The stereoscopic display apparatus according to claim 1, further comprising a flicker detection section that detects a cycle of flicker due to interference of a brightness fluctuation cycle of ambient light of a local apparatus and the opening/closing cycle, wherein the shutter control section controls a duration of an open period or the duration of a closed period of the left and right shutters based on the cycle of the flicker.

10. A stereoscopic display apparatus, comprising:
a liquid crystal panel that modulates light entering from a rear side in accordance with an input left-eye video signal and right-eye video signal to display left-eye video and right-eye video;
a backlight that radiates the liquid crystal panel with the light from the back side;
a backlight control section that controls a light-emitting state of the backlight; and
a shutter control section that controls an open/closed state of left and right shutters of stereoscopic image observation glasses in an opening/closing cycle in accordance with a display cycle of the left-eye video and the right-eye video, wherein:
an open period duration of each of the left and right shutters substantially matches a brightness fluctuation cycle of ambient light of a local apparatus and the backlight control section exercises control so that the backlight is turned on only while the shutter control section exercises control so that one of the left and right shutters is in the closed state.

11. A stereoscopic display apparatus, comprising:
a liquid crystal panel that modulates light entering from a rear side in accordance with an input left-eye video signal and right-eye video signal to display left-eye video and right-eye video;
a backlight that radiates the liquid crystal panel with the light from the back side;
a backlight control section that controls a light-emitting state of the backlight; and
a shutter control section that controls an open/closed state of left and right shutters of stereoscopic image observation glasses in an opening/closing cycle in accordance with a display cycle of the left-eye video and the right-eye video, wherein:
an open period duration of each of the left and right shutters substantially matches 1/2 of a cycle of a commercial power supply voltage supplied to a local apparatus; and
the backlight control section exercises control so that the backlight is turned on only while the shutter control section exercises control so that one of the left and right shutters is in the closed state.

12. A stereoscopic display system, comprising:
the stereoscopic display apparatus according to claim 1; and
stereoscopic image observation glasses in which an open/closed state of left and right shutters is controlled by the stereoscopic display apparatus according to the left-eye video and the right-eye video.
